(19) Europäisches Patentamt
European Patent Office
Office européen des brevets

(11) **EP 2 287 345 A1**

(12) **EUROPÄISCHE PATENTANMELDUNG**

(43) Veröffentlichungstag:
    **23.02.2011 Patentblatt 2011/08**

(51) Int Cl.:
    ***C21D 8/02*** (2006.01)    ***C21D 9/60*** (2006.01)
    ***C21D 11/00*** (2006.01)

(21) Anmeldenummer: **09166174.4**

(22) Anmeldetag: **23.07.2009**

(84) Benannte Vertragsstaaten:
    **AT BE BG CH CY CZ DE DK EE ES FI FR GB GR HR HU IE IS IT LI LT LU LV MC MK MT NL NO PL PT RO SE SI SK SM TR**

(71) Anmelder: **Siemens Aktiengesellschaft**
    **80333 München (DE)**

(72) Erfinder:
    • **Kurz, Matthias, Dr.**
      **91052 Erlangen (DE)**
    • **Weinzierl, Klaus, Dr.**
      **90480 Nürnberg (DE)**

(54) **Verfahren zur Steuerung und/oder Regelung eines Induktionsofens für eine Walzanlage, Steuer- und/oder Regeleinrichtung für eine Walzanlage und Walzanlage zum Herstellen von Walzgut**

(57)    Die Erfindung betrifft eine Walzanlage (20) zum Herstellen von Walzgut (G), eine Steuer- und/oder Regeleinrichtung (9) für eine Walzanlage (20) und ein Verfahren zur Steuerung und/oder Regelung eines Induktionsofens (1) für eine Walzanlage (20), insbesondere Gießwalzverbundanlage, wobei ein Walzgut (G) den Induktionsofen ()1 durchläuft, wobei der Induktionsofen (1) eine Mehrzahl an Induktionsspulen (2) zum Erwärmen des Walzguts (G) aufweist, wobei ein Zustand eines Abschnitts (X) des Walzguts (G) vor Einlaufen des Walzguts (G) in den Induktionsofen (1) ermittelt wird. Indem für den Walzgutabschnitt (X) eine zukünftige, an wenigstens einem zweiten Referenzpunkt (R, R1, R2, R3, Ri, RN) vorliegende, den energetischen Zustand des Walzgutabschnitts (X) oder eine Energiezufuhr beschreibende Ist-Größe mittels eines das energetische Verhalten des Walzgutabschnitts (X) bzw. das Energiezufuhrverhalten beschreibenden Modells (5) berechnet wird, wobei für den wenigstens einen zweiten Referenzpunkt (R, R1, R2, R3, Ri, RN) eine gewünschte zugehörige Soll-Größe ermittelt wird, wobei die Mehrzahl an Induktionsspulen (2) anhand der Abweichungen der zukünftigen Ist-Größe von der Soll-Größe derart gesteuert und/oder geregelt werden, dass die tatsächliche Ist-Größe der Soll-Größe an dem zweiten Referenzpunkt (R, R1, R2, R3, Ri, RN) angenähert wird, kann die Genauigkeit für eine nach der Erwärmung mittels des Induktionsofens vorliegende Zustandsgröße des Walzguts erhöht werden.

EP 2 287 345 A1

**Beschreibung**

Die Erfindung betrifft ein Verfahren zur Steuerung und/oder Regelung eines Induktionsofens für eine Walzanlage, insbesondere Gießwalzverbundanlage, wobei ein Walzgut den Induktionsofen durchläuft, wobei der Induktionsofen eine Mehrzahl an Induktionsspulen zum Erwärmen des Walzguts aufweist, wobei ein Zustand wenigstens eines Abschnitts des Walzguts an einem ersten Referenzpunkt, insbesondere vor Einlaufen des Walzguts in den Induktionsofen, ermittelt wird. Ferner betrifft die Erfindung eine Steuer- und/oder Regeleinrichtung für eine Walzanlage sowie eine Walzanlage, insbesondere Gießwalzverbundanlage, zum Herstellen von Walzgut.

Bei der Herstellung von Walzgut in einer Walzanlage ist es zur Erreichung gewünschter Spezifikationen eines Walzprodukts gegebenenfalls erforderlich, das Walzgut, insbesondere ein Warmwalzgut, in der Walzanlage mit bestimmten Temperaturen zu prozessieren. Denn von der Temperatur des Walzguts hängen die mechanischen Eigenschaften des Walzguts, insbesondere die Gefügestruktur des Walzguts ab. Auch hat die Temperatur wesentlichen Einfluss auf die Einstellung erforderlicher Bearbeitungsparameter, z.B. einer erforderlichen Walzkraft zum Erreichen einer gewünschten Dikkenabnahme des Walzguts.

Aufgrund von Temperaturverlust des Walzguts während seiner Prozessierung in einer Walzanlage kann es erforderlich sein, dass das Warmwalzgut Zwischenerwärmungsschritte durchlaufen muss, damit ein gewünschtes Walzgutendprodukt hergestellt werden kann. Diese Temperaturverluste sind beispielsweise bedingt durch eine Wärmeabstrahlung des Warmwalzguts oder Kontakt mit kälteren Teilen der Walzanlage, z.B. Walzen oder Transportrollen.

Eine effiziente Möglichkeit eine Erwärmung eines Walzguts durchzuführen, ist die Nutzung eines Induktionsofens. Beispielsweise geschieht die Erwärmung des Walzguts mittels eines Induktionsofens in einem sogenannten Zwischenerwärmungsschritt, d.h. in Massenflussrichtung vor dem Erwärmungsschritt und nach dem Erwärmungsschritt wurde bzw. wird das Walzgut weiter bearbeitet.

Bei einem Induktionsofen wird mittels vom Induktionsofen umfassten Induktionsspulen ein Wirbelstrom in dem Walzgut induziert. Dieser induzierte Wirbelstrom führt zu einer Erwärmung des Walzguts.

Ein aus dem Stand der Technik bekanntes Verfahren zum Zwischenheizen eines Warmwalzguts mittels einer Induktionsheizung ist aus der Japanischen Offenlegungsschrift JP 2005 089 785 A bekannt. Hier wird ein Verfahren zum effizienten Herstellen von hochfesten Stählen offenbart, welches einen Induktionsheizschritt umfasst. Die Steuerung der Leistung der Induktionsspulen, welche die Erwärmung des Warmwalzguts verursachen, wird mittels einer Heuristik, d.h. durch Schätzung von Temperaturen an der Oberfläche und in einer Walzgutmitte durchgeführt. Mittels eines iterativen Verfahrens wird versucht, sich einem Zielwert für die Temperatur anzunähern. Bei diesem Verfahren treten potentiell hohe Abweichungen von einer gewünschten Soll-Temperatur zu einer tatsächlichen Ist-Temperatur auf. Dies führt dazu, dass der Heizprozess einerseits mit einer relativ großen prozessualen Unsicherheit behaftet ist und andererseits dadurch Nachteile in nachfolgenden Bearbeitungsschritten des Warmwalzguts entstehen.

Der Erfindung liegt die Aufgabe zugrunde, ein Verfahren und Vorrichtungen bereitzustellen, durch welche die Genauigkeit für eine Fahrweise eines Induktionsofens zur Erhaltung eines gewünschten Ergebnisses erhöht wird.

Die Aufgabe wird bei einem gattungsgemäßen Verfahren dadurch gelöst, dass, insbesondere ausgehend von dem ermittelten Zustand des Walzgutabschnitts, für den Walzgutabschnitt eine zukünftige, an wenigstens einem zweiten Referenzpunkt vorliegende, den energetischen Zustand des Walzgutabschnitts oder eine Energiezufuhr beschreibende Ist-Größe mittels eines das energetische Verhalten des Walzgutabschnitts bzw. das Energiezufuhrverhalten, insbesondere örtlich und zeitlich, beschreibenden Modells berechnet wird, wobei für den wenigstens einen zweiten Referenzpunkt eine gewünschte zugehörige Soll-Größe herangezogen, insbesondere ermittelt, wird, wobei die Mehrzahl an Induktionsspulen anhand der Abweichungen der zukünftigen Ist-Größe von der Soll-Größe gesteuert und/oder geregelt werden, insbesondere derart, dass die tatsächliche Ist-Größe der Soll-Größe an dem zweiten Referenzpunkt angenähert wird. Zunächst wird also ein Zustand, insbesondere eine für den Zustand charakteristische Zustandsgröße, z.B. eine Temperatur, des Walzgutabschnitts an einem ersten Referenzpunkt ermittelt. Vorzugsweise ist der ermittelte Zustand mit einem vollständigen Satz an Zustandsgrößen beschrieben. Dies ist jedoch nicht zwingend. Von diesem dann bekannten Zustand des Walzguts wird i. d. R. für die weitere Berechnung mittelbar oder unmittelbar ausgegangen. Als ein erster Referenzpunkt wird derjenige Referenzpunkt angesehen, an dem ein tatsächlich vorliegender Zustand bzw. eine tatsächlich vorliegende, d.h. aktuelle, Ist-Größe eines Walzgutabschnitts ermittelt wird. Dieser erste Referenzpunkt kann in Massenflussrichtung vor dem Induktionsofen angeordnet sein. Jedoch kann dieser auch innerhalb des Induktionsofens angeordnet sein. Der erste Referenzpunkt ist somit allgemein gesprochen der Ausgangspunkt für die Prognose einer zukünftigen Ist-Größe eines Walzgutabschnitts. Als ein zweiter Referenzpunkt wird ein dem ersten Referenzpunkt in Massenflussrichtung nachgeordneter Referenzpunkt herangezogen. Insbesondere kann dieser dem Induktionsofen in Massenflussrichtung nachgeordnet sein. Alternativ kann auch ein zweiter Referenzpunkt, insbesondere eine Mehrzahl oder Vielzahl an Referenzpunkten, innerhalb des Induktionsofens herangezogen werden. Durch Vorgabe einer Mehrzahl, insbesondere Vielzahl, an zweiten Referenzpunkten innerhalb des Induktionsofens kann auch ein gewünschter Verlauf einer den energetischen Zustand des Walzgutabschnitts oder einer Energiezufuhr beschreibende Größe realisiert werden. Je nach dem, wie viele zweite Referenzpunkte vorgesehen werden, und wo diese zweiten Referenzpunkte angeordnet oder vorgesehen sind, kann eine Verlaufssteuerung bzw. Verlaufsregelung der entsprechenden Größe realisiert werden, oder auf einen bestimmten Zustand der Größe gesteuert oder geregelt werden, insbesondere für einen der letzten Induktionsspule in Massenflussrichtung nachgelagerten zweiten Referenzpunkt. Gleiches gilt für die Steuerung und/oder Regelung der Energiezufuhr analog.

Die Soll-Größe kann durch Heranziehen von Tabellen oder festen Vorgaben realisiert sein. Vorteilhaft ist es jedoch, diese gegebenenfalls in Abhängigkeit von dem gewünschten Walzprodukt dynamisch zu ermitteln.

Für jeden Walzgutabschnitt X, insbesondere aufeinanderfolgende Walzgutabschnitte, kann eine individuelle Soll-Größe bzw. ein individueller Soll-Größenverlauf herangezogen werden.

Alternativ kann eine Verlaufsregelung auch wie folgt formuliert werden: Verfahren zur Steuerung und/oder Regelung eines Induktionsofens für eine Walzanlage, insbesondere Gießwalzverbundanlage, wobei ein Walzgut den Induktionsofen durchläuft, wobei der Induktionsofen eine Mehrzahl an Induktionsspulen zum Erwärmen des Walzguts aufweist, wobei ein Zustand eines Abschnitts des Walzguts vor Einlaufen des Walzguts in den Induktionsofen ermittelt wird, wobei für den Walzgutabschnitt ein zukünftiger Ist-Verlauf einer einen energetischen Zustand des Walzguts oder eine Energiezufuhr für das Walzgut beschreibenden Größe für den Bereich des Induktionsofens mittels eines diese Größe beschreibenden Modells berechnet wird, wobei für diesen Walzgutabschnitt ein gewünschter zugehöriger Soll-Verlauf dieser Größe berechnet wird, und wobei die Mehrzahl an Induktionsspulen anhand einer Abweichung zwischen zukünftigem Ist-Verlauf und Soll-Verlauf gesteuert und/oder geregelt werden, insbesondere derart dass der tatsächliche Ist-Verlauf dem Soll-Verlauf angenähert wird.

Vorzugsweise wird die zukünftige Ist-Größe für einen Zeithorizont ermittelt, der wenigstens dem Durchlaufen des wenigstens einen Walzgutabschnitts durch den Induktionsofen ausgehend von dem ersten Referenzpunkt entspricht. Insbesondere ist vorteilhaft, dass zum Zeitpunkt der Ermittlung für einen bestimmten wenigstens einen Walzgutabschnitt dieser wenigstens eine Walzgutabschnitt die erste Induktionsspule des Induktionsofens in Massenflussrichtung noch nicht erreicht hat. Damit kann eine maximale Variabilität der Beeinflussungsmöglichkeiten für den wenigstens einen Walzgutabschnitt erreicht werden.

In einer vorteilhaften Variante des erfindungsgemäßen Verfahrens wird ein modellprädiktiver Regler zur Umsetzung des Verfahrens verwendet. Hierdurch kann ständig der gesamte induktive Heizprozess prognostiziert werden und beispielsweise über die Prozessdauer für den wenigstens einen Walzgutabschnitt eine entsprechende Ist-Größe ermittelt werden. Mittels einer zu optimierenden Zielfunktion und Berücksichtigung von Nebenbedingungen können dann permanent örtliche und zeitliche Verläufe von Stellsignalen für die Stellglieder, hier Induktionsspulen, ermittelt werden und von den ermittelten optimalen zeitlichen und örtlichen Stellsignalverläufen ständig Werte zu einem gewünschten Zeitpunkt entnommen und auf die Induktionsspule aufgeschaltet werden.

In einer besonders vorteilhaften Ausführungsform der Erfindung wird die Ist-Größe gemeinsam für eine Mehrzahl an Walzgutabschnitten berechnet, wobei die gemeinsam berechneten Walzgutabschnitte prozesstechnisch gekoppelt sind und die prozesstechnische Kopplung bei der Berechnung berücksichtigt wird. Eine derartige Kopplung ist beispielsweise bedingt durch die Erwärmung der Induktionsspulen während ihres Betriebs. Durch die Erwärmung ist es beispielsweise erforderlich, den Energieeintrag ab Erreichen einer bestimmten Grenztemperatur der Induktionsspulen zu drosseln, so dass der Betrieb der Induktionsspulen aufrechterhalten werden kann. Dies führt jedoch dazu, dass Walzgutabschnitte nun nicht mehr derart erhitzt werden können, wie sie es müssten, um eine Soll-Vorgabe zu erreichen. D.h. die aufgrund durch den Betrieb der Induktionsspule für einen ersten Walzgutabschnitt auftretende Erwärmung muss für den möglichen Energieeintrag eines nach dem ersten Walzgutabschnitt zu erhitzenden zweiten Walzgutabschnitts berücksichtigt werden. Daher ist es erforderlich das Verfahren für eine Mehrzahl, insbesondere Vielzahl, an Walzgutabschnitten gemeinsam durchzuführen, um die vorliegenden mittelbaren und unmittelbaren Wechselwirkungen der Walzgutabschnitte untereinander zu berücksichtigen. Zur Kopplung trägt ebenfalls die zwischen den Walzgutabschnitten stattfindende Wärmeleitung im Walzgut bei.

Vorteilhaft ist es ebenso, eine Steuerung und/oder Regelung unter Zuhilfenahme einer, insbesondere die Abweichung gg. unter Einbeziehung von Straftermen und/oder Nebenbedingungen minimierenden, Optimierungsrechnung vorzunehmen. Dies ist ein besonders einfacher Weg, um das erfindungsgemäße Verfahren mittels bekannter Optimierungsverfahren umzusetzen. Insbesondere kann hierbei beispielsweise ein SQP-Verfahren zur Anwendung kommen. Die Verwendung einer Optimierungsrechnung ist vorteilhaft, da technisch gut handhabbar. Insbesondere ist der Rechenaufwand gering, und damit die Steuerung/Regelung onlinefähig. Darüber hinaus können beliebige Randbedingungen berücksichtigt werden, welche der Fachmann für berücksichtigenswert hält. Diese Randbedingungen können beispielsweise Anlagenparameter, Betriebsparameter der Anlage oder Größen, die das gewünschte Walzprodukt mittelbar oder unmittelbar betreffen, sein.

In einer vorteilhaften Ausführungsform des erfindungsgemäßen Verfahrens ist die den energetischen Zustand des Walzguts beschreibende Größe eine Temperatur oder eine Enthalpie. Insbesondere kann die Größe aus dem energetischen Zustand abgeleitet werden, so etwa beispielsweise die Temperatur an der Oberfläche des Walzguts oder eine durchschnittliche Enthalpie eines Walzgutabschnitts/-querschnitts, wo diese ebenfalls einer Messung zugänglich ist. Die direkte Messmöglichkeit der Temperatur begründet deren vorteilhafte Verwendung. Die Verwendung einer Enthalpie hingegen hat den Vorteil, dass sie den energetischen Zustand des Walzguts unabhängig von dessen Phasenanteilen beschreibt. Die Verwendung der Größe Temperatur umfasst sowohl lokalisierte Temperaturzustände als auch Temperaturverläufe, die Größe Enthalpie umfasst sowohl lokalisierte Enthalpiezustände als auch Enthalpieverläufe. Die Größen Temperatur und Enthalpie haben wesentlichen Einfluss auf das entstehende Walzprodukt der Walzanlage.

In einer weiteren vorteilhaften Ausführungsform des erfindungsgemäßen Verfahrens wird für die Steuerung und/oder Regelung, welche anhand einer Abweichung eines Ist-Enthalpieverlaufs von einem Soll-Enthalpieverlauf erfolgt, eine einzuhaltende Temperatur des Walzgutabschnitts an einem zweiten Referenzpunkt, insbesondere am Induktionsofenausgang, berücksichtigt, insbesondere als Nebenbedingung im Rahmen einer Optimierungsrechnung. Die Steuerung und/oder Regelung anhand einer Abweichung eines Ist-Enthalpieverlaufs von einem Soll-Enthalpieverlauf erfolgt vorzugsweise durch Lösen eines Optimierungsproblems, wobei eine Temperatur-Nebenbedingung an einem bestimmten zweiten Referenzpunkt eingehalten wird. Durch eine derartige Vorgehensweise kann gleichzeitig ein gewünschter Enthalpieverlauf mit einem bevorzugten Temperaturzustand des Walzguts, insbesondere am Induktionsofenausgang, realisiert werden.

In einer weiteren vorteilhaften Ausführungsform der Erfindung wird für die Steuerung und/oder Regelung, welche anhand einer Abweichung einer Ist-Energiezufuhr von einer Soll-Energiezufuhr erfolgt, eine einzuhaltende, den energetischen Zustand des Walzguts beschreibende Größe des Walzgutabschnitts an einem zweiten Referenzpunkt, insbesondere am Induktionsofenausgang, insbesondere als Nebenbedingung im Rahmen einer Optimierungsrechnung berücksichtigt. Insbesondere erlaubt diese Ausführungsform eine Priorisierung der Eigenschaften des Endprodukts gegenüber den Eigenschaften des Walzguts während des Durchlaufens des Induktionsofens. Auch hier erfolgt vorzugsweise eine Optimierungsrechnung. In einer anderen Ausgestaltung der Erfindung wird für die Annäherung eines energetischen Zustands des Walzguts eine vorgegebene bzw. einzuhaltende, insbesondere möglichst geringe, Energiezufuhr als Nebenbedingung berücksichtigt. Auch durch diese Fahrweise des Induktionsofens lässt sich eine hohe Energieeffizienz bei gleichzeitig qualitativ hochwertig eingestelltem Walzgutzustand erreichen. Als Energiezufuhr kann insbesondere der Energieverbrauch des Induktionsofens, beispielsweise in Form der Wirkleistung, verwendet werden.

In einer weiteren vorteilhaften Ausführungsform der Erfindung wird in einer zu lösenden Optimierungsaufgabe der Energieverbrauch des Induktionsofens berücksichtigt. Diese Vorgehensweise erlaubt es, den Induktionsofen beispielsweise mit minimalem Energieaufwand zu betreiben und dabei trotzdem sicherzustellen, dass ein gewünschter Zustand, insbesondere Endzustand des Walzguts nach der Induktionserwärmung, insbesondere eine gewünschte Temperatur oder ein gewünschter Enthalpieinhalt, erreicht wird. Dadurch werden einerseits die Betriebskosten für den Induktionsofen minimiert, auf der anderen Seite wird trotzdem ein qualitativ sehr hochwertiges Produkt bereitgestellt.

In einer bevorzugten Ausführungsform des erfindungsgemäßen Verfahrens wird für die Steuerung und/oder Regelung wenigstens eine der folgenden Nebenbedingungen berücksichtigt:

- der zur Steuerung und/oder Regelung einstellbare Leistungseintrag und/oder die zur Steuerung und/oder Regelung erlaubte einstellbare Induktionsfrequenz ist kleiner als ein vorgegebener maximaler Leistungseintrag bzw. eine vorgegebene maximale Induktionsfrequenz,

- die zur Steuerung und/oder Regelung in das Walzgut mittels der Induktionsspulen eingebrachte Energie darf nicht zu einer Walzguttemperatur führen, insbesondere an dessen Oberfläche, welche oberhalb einer maximalen Walzguttemperatur, insbesondere der Schmelztemperatur des Walzguts, liegt,

- die zur Steuerung und/oder Regelung eingesetzten Induktionsspulen können keinen negativen Energieeintrag in das Walzgut leisten.

Durch derartige Nebenbedingungen werden einerseits anlagenbedingte Grenzen, insbesondere technische Grenzen der Induktionsspulen, berücksichtigt. Andererseits werden technologische Grenzen berücksichtigt, deren Überschreiten zu einer Herstellung von nicht weiter verwendbarem Walzgut führen würde. Durch derartige Nebenbedingung wird somit einerseits die Anlage geschützt, und andererseits eine fehlerfreie Erhitzung des Walzguts sichergestellt, ohne dass negative Auswirkungen auf das Walzgut bzw. auf einen der nachfolgenden Bearbeitungsschritte bedingt werden.

In einer weiteren vorteilhaften Ausführungsform des erfindungsgemäßen Verfahrens wird der Zustand des Walzguts vor dem Induktionsofen durch eine Messung und/oder durch Übernahme eines Zustands von einem anderen einen Zustand des Walzguts ermittelnden Modell ermittelt. Ein derartiges anderes Modell kann beispielsweise ein Modell sein, welches einem Bearbeitungsschritt zugeordnet ist, der in Massenflussrichtung vor dem Induktionsofen abläuft. Dies kann beispielsweise ein Modell für eine Vorstraße sein. Liegt ein geringer Automatisierungsgrad der Walzanlage vor, etwa bei einer Altanlage, so kann das Modell für den Induktionsofen mittels eines Messwertes, insbesondere eines Temperaturmesswertes, des Walzguts initialisiert werden. Im Fall eines hohen Automationsgrads der Walzanlage kann zusätzlich oder alternativ ein von einem anderen Modell, beispielsweise von einem den Zustand des Walzguts in einer Vorstraße verfolgenden Modell, ermittelter Zustand des Walzguts übernommen werden. Gegebenenfalls kann dieser mit dem anderen Modell ermittelte Zustand des Walzguts anhand eines erfassten Messwerts des Walzguts vor dem Induktionsofen noch korrigiert werden, bevor dieser für das Modell des Induktionsofens als Ausgangszustand verwendet wird. Die Übernahme eines errechneten und gegebenenfalls mittels einer Messung korrigierten Walzgutzustands hat den Vorteil, dass dieser mittels eines Modells berechnete Zustand, insbesondere Temperatur- und Gefügezustand, in der Regel viel genauer ist, als eine punktuelle Messung der Temperatur des Walzguts. Durch Übergabe des Zustands von einem anderen Modell an das für den Induktionsofen zuständige Modell kann in einfacher Weise eine hohe Genauigkeit für die Steuerung und/oder Regelung des Induktionsofens erzielt werden.

In einer vorteilhaften Ausführungsform der Erfindung berücksichtigt das Modell eine Energieabfuhr aus und eine Energiezufuhr in das Walzgut. Derartige Terme sind von hoher Bedeutung für eine realitätsnahe Beschreibung des Walzgutzustands, insbesondere während des induktiven Heizens. Die Energieabfuhr ist z.B. bedingt durch thermische Abstrahlung und Kontakt des Walzguts mit den Rollen des Rollgangs. Die Energiezufuhr ist hauptsächlich durch die von den Induktionsspulen in das Walzgut eingebrachte Energie bedingt.

In einer besonders vorteilhaften Ausgestaltung der Erfindung beschreibt das Modell die Auswirkung einer durch die Induktionsspulen bewirkten Energiezufuhr tiefenabhängig für das Walzgut. Dadurch wird eine besonders hohe Genauigkeit erreicht. Insbesondere kann dadurch ein gewünschter Zustand für oberflächenferne Bereiche des Walzguts eingestellt werden, ohne dass kritische Oberflächentemperaturen des Walzguts überschritten werden. Denn die Zuführung von Energie in das Walzgut mittels magnetischer Wechselfelder ist in hohem Maße abhängig von der Eindringtiefe der Wechselfelder in das Walzgut. Die Eindringtiefe ist wiederum stark abhängig von der Frequenz des auf das Walzgut eingestrahlten magnetischen Wechselfelds. Aus diesem Grund ist besonders vorteilhaft, dass das Modell eine tiefenabhängige Energieeinkopplung in das Walzgut berücksichtigt.

In einer weiteren vorteilhaften Ausführungsform des erfindungsgemäßen Verfahrens ist das Modell derart ausgebildet, dass es eine während des Erwärmens des Walzguts auftretende Phasenumwandlung berücksichtigt. Hierdurch wird eine besonders hohe Genauigkeit des berechneten Zustands des Walzguts erreicht, da auch die durch eine Phasenumwandlung dem Walzgut zugeführte bzw. entzogene Energie berücksichtigt wird. Dies kann beträchtlichen Einfluss auf die Temperatur des Walzguts nehmen. Insofern ist es in hohem Maße vorteilhaft, ein derartiges Modell, welches eine Phasenumwandlung berücksichtigen kann, zu verwenden. Phasenumwandlungsmodelle sind dem Fachmann grundsätzlich bekannt, z.B. aus DE 102 51 716 B3.

In einer weiteren vorteilhaften Ausführungsform des erfindungsgemäßen Verfahrens wird die Mehrzahl an Induktionsspulen einzeln gesteuert und/oder geregelt. Dadurch wird eine hohe Variabilität der Steuerung bzw. Regelung des Induktionsofens erreicht und ein besonders gutes Ergebnis, insbesondere individuell für jeden Walzgutabschnitt.

In einer weiteren vorteilhaften Ausführungsvariante des erfindungsgemäßen Verfahrens ist die zukünftige Ist-Größe ein Ist-Temperaturverlauf in Breitenrichtung des Walzguts und die Soll-Größe ein Soll-Temperaturverlauf, wobei ein Teil der Induktionsspulen aus der Mehrzahl an Induktionsspulen derart angeordnet ist und derart geregelt wird, dass die tatsächliche Ist-Temperaturverteilung in Breitenrichtung der Soll-Temperaturverteilung in Breitenrichtung angenähert wird. In diesem Fall ist ein zu verwendendes Modell derart ausgebildet, dass dieses den Temperaturverlauf in Breitenrichtung des Walzguts berechnen kann. Die Einstellung einer Temperaturverteilung in Breitenrichtung kann alternativ oder zusätzlich zu der in Längsrichtung des Walzguts durchführbaren Einstellung der oben genannten Größen erfolgen. Durch eine einstellbare Erwärmung in Breitenrichtung anhand eines geeigneten Modells kann insbesondere der sogenannte edge drop, in diesem Fall ein unerwünschter Temperaturabfall an den Bandkanten, berücksichtigt werden. Insbesondere kann diesem entgegengewirkt werden. Vorzugsweise wird versucht, eine homogene Temperatur in Bandbreitenrichtung, insbesondere am Induktionsofenausgang, einzustellen.

Vorteilhaft ist es insbesondere auch, eine Einrichtung zur Messung einer Zustandsgröße dem Induktionsofen in Massenflussrichtung nachzuordnen, wobei das Modell anhand der gemessenen Zustandsgröße derart adaptiert wird, dass ein mittels dem Modell ermittelter Zustand am Messort dem gemessenen Zustand des Walzguts angenähert wird.

Die Aufgabe wird ebenfalls gelöst durch eine Steuer- und/oder Regeleinrichtung für eine Walzanlage, insbesondere Gießwalzverbundanlage, mit einem maschinenlesbaren Programmcode, welcher Steuerbefehle aufweist, welche bei deren Ausführung die Steuer- und/oder Regeleinrichtung zur Durchführung des Verfahrens nach einem der Ansprüche 1 bis 16 veranlassen.

Darüber hinaus wird die Aufgabe gelöst durch eine Walzanlage, insbesondere Gießwalzverbundanlage, zum Herstellen von Walzgut, mit einem eine Mehrzahl an Induktionsspulen umfassenden Induktionsofen zum Erwärmen von den Induktionsofen durchlaufendem Walzgut, mit einer Steuer- und/oder Regeleinrichtung nach Anspruch 17, wobei die Mehrzahl an Induktionsspulen mit der Steuer- und/oder Regeleinrichtung wirkverbunden sind.

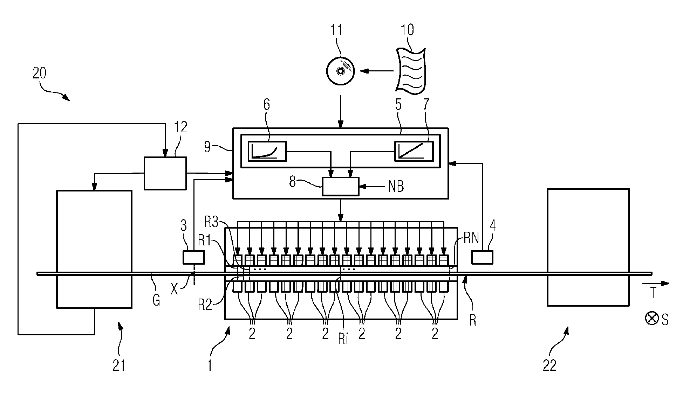

Weitere Vorteile der Erfindung ergeben sich aus einem Ausführungsbeispiel, welches anhand der nachfolgenden Zeichnung genauer erläutert wird. Die einzige Figur zeigt eine schematische Darstellung eines Induktionsofens 1 als Teil einer schematisch dargestellten Walzanlage 20.

Der Induktionsofen 1 umfasst eine Vielzahl an Induktionsspulen 2, mittels derer ein den Induktionsofen 1 durchlaufendes Walzgut G erhitzt werden kann. Die Induktionsspulen 2 sind einzeln über eine Steuer- und/oder Regeleinrichtung 9 einstellbar.

Die Steuer- und/oder Regeleinrichtung 9 ist mittels eines maschinenlesbaren Programmcodes 10 programmiert, der der Steuer- und/oder Regeleinrichtung 9 beispielsweise über ein Speichermedium 11 zugeführt wurde, und auf der Steuer- und/oder Regeleinrichtung 9 speicherprogrammiert hinterlegt wurde. Der maschinenlesbare Programmcode 10 ist derart ausgebildet, dass er die Steuer- und/oder Regeleinrichtung 9 zur Durchführung einer Ausführungsform des erfindungsgemäßen Verfahrens veranlassen kann.

Die dargestellte Figur umfasst ferner ein schematisch dargestelltes, dem Induktionsofen 1 in Massenflussrichtung T vorgeordnetes weiteres Aggregat 21 der Walzanlage 20, etwa eine Vorstraße oder Rollengießmaschine. Ferner zeigt die Figur ein dem Induktionsofen in Massenflussrichtung T nachgeordnetes Aggregat 22, etwa eine eingerüstige oder mehrgerüstige Fertigstraße.

Es handelt sich hierbei um Beispiele für dem Induktionsofen 1 vorgeordnete bzw. nachgeordnete Aggregate 21 bzw.22. Die mit dem Bezugszeichen 21 versehene Einheit könnte beispielsweise auch für eine Mehrzahl an Aggregaten stehen, beispielsweise einer Gießmaschine mit einer nachfolgenden High Reduction Mill. Die mit dem Bezugszeichen 22 versehene Einheit könnte ebenfalls für eine Mehrzahl an Aggregaten stehen, beispielsweise für eine Entzunderungseinrichtung mit anschließender Fertigstraße, Kühlstrecke und Haspel.

Um ein qualitativ hochwertiges Walzprodukt zu erhalten, ist es erforderlich, den Walzgutzustand an einem bestimmten Referenzpunkt, im Rahmen dieser Anmeldung als zweiten Referenzpunkt bezeichnet, möglichst genau einzustellen. Dies kann beispielsweise die Temperatur der Oberfläche des Walzguts G betreffen oder auch dessen durchschnittliche Enthalpie über den Walzgutquerschnitt, da beide Größen das Endprodukt bzw. die Bearbeitungsschritte des Walzguts G hin zum Endprodukt maßgeblich beeinflussen.

Hierzu ist zunächst erforderlich einen zweiten Referenzpunkt R bzw. mehrere zweite Referenzpunkte R1, R2, R3,..., Ri, ..., RN, insbesondere eine Vielzahl an zweiten Referenzpunkten, festzulegen, an welchen das Walzgut G bzw. ein Walzgutabschnitt X des Walzguts G einen bestimmten Zielwert aufweisen soll.

Durch Festlegen eines einzigen zweiten Referenzpunkts R, vorzugsweise am Ausgang des Induktionsofens 1, kann auf einen gewünschten Zielwert, insbesondere einen Auslaufzustand, eines Walzgutabschnitts X gesteuert bzw. geregelt werden, beispielsweise auf eine gewünschte Oberflächentemperatur oder Durchschnittsenthalpie.

Bei der Verwendung einer Vielzahl an zweiten Referenzpunkten R1, R2, R3,...,Ri,..., RN, welche insbesondere innerhalb des Induktionsofens, insbesondere längs der Massenflussrichtung des Walzguts G, angeordnet sind, kann auch ein Verlauf einer gewünschten Größe des Walzgutabschnitts X, z.B. der Temperatur oder der durchschnittlichen Walzgutquerschnittsenthalpie, während des Durchlaufens des Induktionsofens realisiert werden. Insbesondere können benachbart liegende zweite Referenzpunkte derart eng benachbart sein, dass ein kontinuierlicher bzw. quasikontinuierlicher Verlauf einer Größe für das Walzgut erreicht wird.

Zunächst wird für einen Walzgutabschnitt X, welcher in Massenflussrichtung bzw. Transportrichtung T vorzugsweise noch vor der ersten Induktionsspule 2 des Induktionsofens 1 angeordnet ist, ein Ist-Zustand ermittelt. Dieser Ort wird als erster Referenzpunkt bezeichnet. Dies kann mittels einer dem Induktionsofen in Massenflussrichtung T vorgeordneten Messeinrichtung 3, beispielsweise einer Temperaturmesseinrichtung, erfolgen.

Der erste Referenzpunkt muss nicht notwendigerweise vor dem Induktionsofen 1 angeordnet sein, sondern kann auch innerhalb des Ofens 1 liegen. Dies ist insbesondere für Aktualisierungen von Prognosen interessant. Der erste Referenzpunkt ist somit derjenige Punkt von dem die Prognose einer zukünftigen Ist-Größe ausgeht.

Alternativ oder in Kombination kann ein berechneter Walzgutzustand für den entsprechenden Walzgutabschnitt X von einem Modell 12 übernommen werden, welches einen Prozess eines dem Induktionsofen 1 in Massenflussrichtung vorgeordneten Aggregats 21, etwa einer Vorstraße, beschreibt.

Mit Hilfe eines Modells für den Induktionsheizprozess wird nun eine zukünftige Größe, z.B. die Temperatur, ausgehend von dem gemessenen oder von einem anderen Modell 12 übernommenen Startzustand und einer vorgegebenen Induktionsofenfahrweise für den Walzgutabschnitt X an einem noch zu erreichenden zweiten Referenzpunkt ermittelt.

Das Modell 5 für den Induktionsheizprozess beschreibt alle wesentlichen Einflüsse für das Walzgut während des Durchlaufens des Induktionsheizprozesses und insbesondere die durch derartige Einflüsse bedingten Zustandsänderungen für das Walzgut.

Insbesondere umfasst das Modell 5 einen örtlich und zeitlich aufgelösten Energieverlust des Walzguts G, etwa durch Abstrahlung oder Kontakt mit Maschinenelementen, z.B. Rollgangsrollen, sowie eine örtlich und zeitlich aufgelöste Energiezufuhr durch die Induktionsspulen 2 des Induktionsofens 1 in das Walzgut. Insbesondere ist das Modell 5 derart ausgebildet, dass es die Energiezufuhr abhängig von der Eindringtiefe für das Walzgut G, insbesondere für den jeweiligen Walzgutabschnitt X, beschreibt. Darüber hinaus beschreibt das Modell 5 auch durch einen Energieverlust oder durch einen Energieeintrag in das Walzgut bedingte Phasenumwandlungen und dadurch bedingte Änderungen der Temperatur. Mittels eines derartigen Modells 5 lässt sich - ausgehend von einem von einem anderen Modell 12 übergebenen oder einem gemessenen Walzgutzustand - eine zukünftige Ist-Größe, z.B. zukünftige Ist-Temperatur, für einen zweiten Referenzpunkt R, R1, R2, R3,..., Ri,...,RN, bzw. ein zukünftiger Ist-Größenverlauf, z.B. ein zukünftiger Ist-Temperatur-Verlauf für einen zweiten Referenzpunkt R, R1, R2, R3,..., Ri,...,RN ermitteln. Diese Ermittlung erfolgt für einen bestimmten Walzgutabschnitt X und für eine vorgegebene Fahrweise des Induktionsofens 1.

Insbesondere, wenn die Induktionsheizung 1 eine Mehrzahl an Induktionsspulen 2 in Breitenrichtung S aufweist, ist eine Verteilung einer den energetischen Zustand des Walzguts G beschreibende Größe in Breitenrichtung vorteilhaft ermittelbar. Denn letztgenannte Modellierung erlaubt es, einen unerwünschten, stets an den Walzgutkanten auftretenden Temperaturabfall, einen sogenannten "edge drop", zu beschreiben. Durch die Verwendung derartiger Ergebnisse zur Ansteuerung der Induktionsspulen 2 in Breitenrichtung kann gezielt einem solchen Temperaturabfall entgegengewirkt werden, wodurch Probleme für nachfolgende Bearbeitungsschritte bzw. unerwünschte Walzguteigenschaften für das Endprodukt verringert oder vermieden werden.

Während der Ermittlung der Ist-Größe ist der Walzgutabschnitt X vorzugsweise noch an einer Position, an der er noch nicht durch die erste Induktionsspule 2 des Induktionsofens in Massenflussrichtung erhitzbar ist, vgl. Position des Walzgutabschnitts X in Figur. Dadurch ist die Variabilität der Einflussnahme auf den Induktionsheizprozess möglichst groß, da alle Induktionsspulen 2 noch in gewünschter Weise zur Erhitzung des Walzgutabschnitts X beitragen können.

Selbstverständlich kann aber auch ein Walzgutabschnitt X an einer anderen Position im Induktionsofen für die Ermittlung zukünftiger Ist-Größen herangezogen werden. Dies ist insbesondere dann der Fall, wenn im Rahmen einer modellprädiktiven Regelung eine früher erfolgte Berechnung zukünftiger Induktionsspulenströme für Spulen, die in Massenflussrichtung nachfolgend angeordnet sind, noch einmal durch eine neue Berechnung überprüft wird, bevor die Spulenströme dann aufgeschaltet werden.

Dazu benutzt man einen Walzgutabschnitt, z.B. unmittelbar in Massenflussrichtung vor einer Spule m positioniert und berechnet die, insbesondere optimalen, Einstellungen für die relativ zum Walzgutabschnitt X in Massenflussrichtung nachfolgenden Spulen m, m+1,...,

M. Die Spulenströme der Spulen 1,...,m-1 haben dabei bereits auf den Walzgutabschnitt X in der Vergangenheit eingewirkt und sind im aktuellen Zustand des Walzgutabschnitts X berücksichtigt. Auf diese Weise erhält man aktualisierte Einstellungen für die Spulen m, m+1,...,M, welche zwischenzeitlich aufgetretene Störungen berücksichtigt. Dabei ist m eine Zahl zwischen 1 und M.

Ferner wird für den Walzgutabschnitt X für denselben zweiten Referenzpunkt R bzw. dieselben zweiten Referenzpunkte R, R1, R2, R3,..., Ri,...,RN gewünschte Soll-Größen ermittelt. Diese ergeben sich beispielsweise aus den Anforderungen an die Eigenschaften des Walzguts G, insbesondere an das Walzprodukt, sowie aus den technologischen und/oder technischen Randbedingungen der nachfolgend für das Walzgut G vorgesehenen Bearbeitungsschritte.

Anhand der ermittelten zukünftigen Ist-Größen, beispielsweise Ist-Temperaturen, oder eines Ist-Größenverlaufs und der gewünschten Soll-Größen, beispielsweise Soll-Temperaturen, oder eines Soll-Größenverlaufs, wird nun mittels einer Zielfunktion eine Abweichung zwischen Ist-Größe bzw. Ist-Größenverlauf und Soll-Größe bzw. Soll-Größenverlauf minimiert bzw. maximiert, je nach Formulierung der Zielfunktion. Beispielsweise kann eine zu minimierende Zielfunktion ZF für einen Walzgutabschnitt X wie folgt definiert sein:

$$ \mathrm{ZF} \;=\; \int_{te}^{ta} \big[ T(x(t))_{ist} - T(x(t))_{Soll} \big]^2 \, dt $$

mit:

te = Zeitpunkt des Eintritts des Walzgutabschnitts X in den Ofen
ta = Zeitpunkt des Austritts des Walzgutabschnitts X aus dem Ofen
t: Zeit
x: Position des Walzgutabschnitts X im Ofen
$T(x)$: über den Walzgutquerschnitt gemittelte Temperatur des Walzgutabschnitts X an Position x des Ofens

Alternativ kann eine Zielfunktion auch wie folgt definiert werden:

$$ \mathrm{ZF} \;=\; \int_{te}^{ta} \big[ T(t)_{ist} - T(t)_{Soll} \big]^2 \, dt $$

mit:

te = Zeitpunkt des Eintritts des Walzgutabschnitts X in den Ofen

ta = Zeitpunkt des Austritts des Walzgutabschnitts X aus dem Ofen

t: Zeit

x: Position des Walzgutabschnitts X im Ofen

T(t): über den Walzgutquerschnitt gemittelte Temperatur des Walzgutabschnitts X als Funktion der Zeit

Ferner ist auch folgende Alternative einer Zielfunktion möglich:

$$ZF \;=\; \sum_{i=1}^{N}\left[T(x_i)_{ist} - T(x_i)_{soll}\right]^2$$

mit:

$T(x_i)_{ist}$ = Temperatur des Walzgutabschnitts X an Position $x_i$ des Ofens

$T(x_i)_{soll}$ = Solltemperatur an Position $x_i$

$x_i$ = Abschnitt des Induktionsofens, beispielsweise eine Vielzahl an zweiten Referenzpunkten innerhalb des Induktionsofens R1 bis RN.

Bei einer Kopplung von Walzgutabschnitten X, wie dies weiter unten beschrieben ist, kann eine Zielfunktion wie folgt formuliert werden:

$$ZF \;=\; \int_{\widetilde{x}_1}^{\widetilde{x}_2}\int_{te}^{ta}\left[T(\widetilde{x},t)_{ist} - T(\widetilde{x},t)_{soll}\right]^2 d\widetilde{x}\,dt$$

mit:

$\widetilde{x}$ = Position eines Walzgutabschnitts X im Walzgut G

$T(\widetilde{x},\bullet)$ = zeitlicher Temperaturverlauf des Walzgutabschnitts X mit fester Position $\widetilde{x}$, gemittelt über Walzgutquerschnitt $T(\bullet,t)$ = örtliche Temperaturverteilung im Band zum festen Zeitpunkt t, gemittelt über Walzgutquerschnitt

te = Zeitpunkt des Eintritts des Walzgutabschnitts X in den Ofen

ta = Zeitpunkt des Austritts des Walzgutabschnitts X aus dem Ofen

Darüber hinaus kann bzw. können auch ein oder mehrere, gegebenenfalls gewichtete, Strafterme in einer Zielfunktion berücksichtigt werden, beispielsweise die Summe der elektrischen Leistungen der Spulen des Induktionsofens, welche die Minimierung einer Zielfunktion beeinflussen. Derartige Strafterme sind für alle obigen Zielfunktionen anwendbar:

$$ZF_{straf} \;=\; ZF \;+\; \mu\int_{te}^{ta}\sum_{n=1}^{N}u_n(t)\cdot i_n(t)\,dt$$

mit:

$\mu$ = Gewichtungsfaktor des Strafterms

$u_n(t)$ = zeitlicher Verlauf der Spannung für Spule n

$i_n(t)$ = zeitlicher Verlauf des Stroms für Spule n

n = Zählindex für Spule, läuft von 1 bis N

te = Zeitpunkt des Eintritts des Walzgutabschnitts X in den Ofen

ta = Zeitpunkt des Austritts des Walzgutabschnitts X aus dem Ofen

Grundsätzlich dient eine Zielfunktion der Bewertung der Abweichung eines Soll-Zustands von einem Ist-Zustand. Dazu werden aus den Ist-Zuständen bzw. Soll-Zuständen eine oder mehrere Größen abgeleitet, die miteinander verglichen werden können. Insbesondere kann mittels einer Zielfunktion eine örtliche und/oder zeitliche Abweichung von Ist-Größen zu Soll-Größen bewertet werden. Werden keine Strafterme in die Optimierungsrechnung einbezogen, ist die Zielfunktion minimal, wenn die Ist-Größe mit der Soll-Größe übereinstimmt. Alternativ kann eine mit -1 multiplizierte Zielfunktion verwendet werden. Hier ist diese zu maximieren, um eine Übereinstimmung von Ist-Größe mit Soll-Größe zu erhalten.

Als Nebenbedingungen werden unabhängig von der verwendeten Zielfunktion berücksichtigt, dass die Energiezufuhr durch die Induktionsspulen 2 in das Walzgut G nicht negativ werden kann, dass hinsichtlich Leistung und Frequenz der Induktionsspulen 2 maximal zulässige Grenzwerte einzuhalten sind, und dass eine maximale Oberflächentemperatur des Walzguts G nicht überschritten werden darf, beispielsweise um Oberflächendefekte, insbesondere ein Aufschmelzen der Oberfläche, zu vermeiden.

Durch örtliche und/oder zeitliche Variation der Energiezufuhr der Induktionsspulen 2 kann so eine Einstellung der Induktionsspulen ermittelt werden, die es erlaubt, die Abweichung zwischen der Ist-Größe bzw. dem Ist-Größenverlauf und der Soll-Größe bzw. dem Soll-Größenverlauf unter Einhaltung obiger Nebenbedingungen zu minimieren.

Die vorgenannten Berechnungen erfolgen mittels der Steuer-und/oder Regeleinrichtung 9 in einem dafür vorgesehenen Modul 8.

Das oben beschrieben Verfahren oder eine beliebige andere Ausführungsform des erfindungsgemäßen Verfahrens wird vorzugsweise für eine Vielzahl an nacheinander in den Induktionsofen 1 einlaufenden Walzgutabschnitten X durchgeführt.

Dabei ist es besonders vorteilhaft, eine Kopplung von Eigenschaften benachbarter Walzgutabschnitte X, z.B. der Temperatur, zu berücksichtigen, insbesondere mittels des Modells 5. Weisen etwa direkt benachbarte Walzgutabschnitte X unterschiedliche Temperaturen auf, z.B. aufgrund der von den Induktionsspulen in das Walzgut eingebrachten Energie, so kommt es zu einem Temperaturausgleich durch Wärmeleitung längs des Walzguts. Dieser Einfluss kann vorteilhaft für beide Walzgutabschnitt X für die Annäherung einer Ist-Größe an die Soll-Größe berücksichtigt werden. Hierdurch wird das Erreichen einer Soll-Größe bzw. die Annäherung an eine Soll-Größe eines Walzgutabschnitt X verbessert.

Diese für die einzelnen Induktionsspulen 2 ermittelten Einstellungen werden dann von der Steuer- und/oder Regeleinrichtung 9 umgesetzt und die Induktionsspulen 2 werden gemäß des erhaltenen Ergebnisses derart gesteuert bzw. geregelt, dass der Walzgutabschnitt X an dem herangezogenen zweiten Referenzpunkt eine Soll-Größe, beispielsweise eine Soll-Temperatur, bzw. eine unter Einhaltung der Randbedingungen minimale Abweichung von dieser Soll-Größe, aufweist.

Mittels eines derartigen Verfahrens können verschiedene Fahrweisen des Induktionsofens 1 realisiert werden. Nachfolgend sind einige, nicht abschließend aufgezählte Fahrweisen für den Induktionsofen genannt.

Beispielsweise kann ein Ist-Enthalpieverlauf des Walzgutabschnitts X an einen Soll-Enthalpieverlauf des Walzgutabschnitts X angenähert werden, wobei als Nebenbedingung eine Temperatur des Walzgutabschnitts X an einem zweiten Referenzpunkt R, insbesondere am Induktionsofenausgang, vorliegen soll.

Der Walzgutabschnitt X kann beispielsweise auch auf einen gewünschten Temperaturverlauf oder Enthalpieverlauf gesteuert bzw. geregelt werden, wobei der Energieeintrag und damit der Energieverbrauch durch die Induktionsspulen 2 in das Walzgut G möglichst gering, insbesondere minimal, sein soll.

Auch kann der Walzgutabschnitt X nur auf einen gewünschten Endzustand, z.B. eine Durchschnittstemperatur oder eine über den Walzgutquerschnitt gemittelte Durchschnittsenthalpie am Ausgang des Induktionsofens 1, gesteuert und/oder geregelt werden. Dies kann auch in Kombination mit einem vorgegebenen Temperaturverlauf bzw. Enthalpieverlauf erfolgen, d.h. der Walzgutabschnitt X wird beispielsweise auf Erreichen eines Soll-Temperaturverlaufs innerhalb des Induktionsofens und auf Erreichen eines Temperaturzustands am Ausgang des Induktionsofens gesteuert bzw. geregelt.

Von umweltpolitischer Bedeutung ist die Variante, dass der Induktionsofen 1 bei minimalem Energieverbrauch betrieben wird und dabei jedoch noch ein gewünschter Zustand des Walzguts G, z.B. Temperatur, an einem vorgegebenen zweiten Referenzpunkt R, R1, R2, R3,..., Ri,...,RN erreicht wird, besonders vorteilhaft.

Obige Ausführungsformen sind nur Beispiele. Es steht dem Fachmann frei, weitere Größenverläufe und -zustände in vorteilhafter Weise zur Einstellung einer gewünschten Fahrweise eines Induktionsofens zu kombinieren.

Besonders vorteilhaft ist ein gemäß der Erfindung betriebener Induktionsofen 1 in Gießwalzverbundanlagen einsetzbar, in welchen das Walzgut G zwischen Gießeinrichtung und einer Walzeneinheit, z.B. einer Vorstraße oder einer Fertigstraße, einteilig ausgebildet ist. Dies ist z.B. der Fall für Dünnbandgießanlagen, bei welchen in der Regel erst vor dem Haspel geschnitten wird, oder bei Endloswarmwalzprozessen für Brammen, mit über mehrere Anlagenaggregate einteilig ausgebildetem Walzgut.

Das Verfahren ist jedoch nicht auf die Verwendung in derartigen Anlagen beschränkt, sondern ist grundsätzlich für jeden beliebigen Anlagentyp, bei welchem ein induktiver Heizschritt für ein Walzgut durchgeführt wird, anwendbar.

## Patentansprüche

1. Verfahren zur Steuerung und/oder Regelung eines Induktionsofens (1) für eine Walzanlage (20), insbesondere Gießwalzverbundanlage, wobei ein Walzgut (G) den Induktionsofen (1) durchläuft, wobei der Induktionsofen (1) eine Mehrzahl an Induktionsspulen (2) zum Erwärmen des Walzguts (G) aufweist, wobei ein Zustand wenigstens eines Abschnitts (X) des Walzguts (G) an einem ersten Referenzpunkt, insbesondere vor Einlaufen des Walzguts (G) in den Induktionsofen (1), ermittelt wird,
**dadurch gekennzeichnet, dass**
für den wenigstens einen Walzgutabschnitt (X) eine zukünftige, an wenigstens einem zweiten Referenzpunkt (R, R1, R2, R3, Ri, RN) vorliegende, den energetischen Zustand des Walzgutabschnitts (X) oder eine Energiezufuhr beschreibende Ist-Größe mittels eines das energetische Verhalten des Walzgutabschnitts (X) bzw. das Energiezufuhrverhalten beschreibenden Modells (5) berechnet wird, wobei für den wenigstens einen zweiten Referenzpunkt (R, R1, R2, R3, Ri, RN) eine gewünschte zugehörige Soll-Größe herangezogen wird, wobei die Mehrzahl an Induktionsspulen (2) anhand einer Abweichung der zukünftigen Ist-Größe von der Soll-Größe gesteuert und/oder geregelt wird, insbesondere derart, dass die tatsächliche Ist-Größe der Soll-Größe an dem zweiten Referenzpunkt (R, R1, R2, R3, Ri, RN) angenähert wird.

2. Verfahren nach Anspruch 1,
**gekennzeichnet durch** die Verwendung eines modellprädiktiven Reglers, insbesondere unter Einbeziehung einer Zielfunktion zur Bewertung der Abweichung und zur Ermittlung von Stellgrößen.

3. Verfahren nach einem der vorhergehenden Ansprüche,

**dadurch gekennzeichnet, dass** die Ist-Größe und/oder die Soll-Größe gemeinsam für eine Mehrzahl an Walzgutabschnitten (X) berechnet wird, wobei die gemeinsam berechneten Walzgutabschnitte (X) prozesstechnisch gekoppelt sind, und die prozesstechnische Kopplung bei der Berechnung berücksichtigt wird.

4. Verfahren nach einem der vorhergehenden Ansprüche,
**dadurch gekennzeichnet, dass** die Steuerung und/oder Regelung mittels einer Optimierungsrechnung erfolgt.

5. Verfahren nach einem der vorhergehenden Ansprüche,
**dadurch gekennzeichnet, dass** die den energetischen Zustand des Walzguts (G) beschreibende Größe eine Temperatur oder eine Enthalpie des Walzguts (G) ist.

6. Verfahren nach Anspruch 5,
**dadurch gekennzeichnet, dass** für die Steuerung und/oder Regelung, welche anhand einer Abweichung eines Ist-Enthalpieverlaufs von einem Soll-Enthalpieverlauf erfolgt, eine einzuhaltende Temperatur des wenigstens einen Walzgutabschnitts (X) an einem zweiten Referenzpunkt (R, R1, R2, R3, Ri, RN), insbesondere an einem Ausgang des Induktionsofens (1), berücksichtigt wird, insbesondere als Nebenbedingung im Rahmen einer Optimierungsrechnung.

7. Verfahren nach einem der vorhergehenden Ansprüche,
**dadurch gekennzeichnet, dass** für die Steuerung und/oder Regelung, welche anhand der Abweichung einer die Energiezufuhr beschreibenden Ist-Größe von einer die Energiezufuhr beschreibenden Soll-Größe erfolgt, eine einzuhaltende, den energetischen Zustand des Walzguts (G) beschreibende Größe des wenigstens einen Walzgutabschnitts (X) an einem zweiten Referenzpunkt (R, R1, R2, R3, Ri, RN), insbesondere an einem Ausgang des Induktionsofens (1), berücksichtigt wird, insbesondere als Nebenbedingung im Rahmen einer Optimierungsrechnung.

8. Verfahren nach einem der vorhergehenden Ansprüche,
**dadurch gekennzeichnet, dass** für die Steuerung und/oder Regelung eines energetischen Zustands des Walzguts (G) eine einzuhaltende, insbesondere minimale, Energiezufuhr, insbesondere als Strafterm im Rahmen einer Optimierungsrechnung, berücksichtigt wird.

9. Verfahren nach einem der vorhergehenden Ansprüche,
**dadurch gekennzeichnet, dass** für die Steuerung und/oder Regelung wenigstens eine der folgenden Nebenbedingungen berücksichtigt wird:

- der zur Steuerung und/oder Regelung einstellbare Leistungseintrag und/oder die zur Steuerung und/oder Regelung erlaubte einstellbare Induktionsfrequenz ist kleiner als ein vorgegebener maximaler Leistungseintrag bzw. eine vorgegebene maximale Induktionsfrequenz,
- die zur Steuerung und/oder Regelung in das Walzgut mittels der Induktionsspulen eingebrachte Energie darf nicht zu einer Walzguttemperatur führen, insbesondere an dessen Oberfläche, welche oberhalb einer maximalen Walzguttemperatur, insbesondere der Schmelztemperatur des Walzguts, liegt,
- die zur Steuerung und/oder Regelung eingesetzten Induktionsspulen keinen negativen Energieeintrag in das Walzgut leisten können.

10. Verfahren nach einem der vorhergehenden Ansprüche,
**dadurch gekennzeichnet, dass** der Zustand des Walzguts (G) vor dem Induktionsofen (1) durch eine Messung und/oder durch Übernahme eines Zustands von einem anderen den Zustand des Walzguts verfolgenden Modell (12), insbesondere von einem den Zustand des Walzguts (G) ermittelnden Modell (12) für einen in Massenflussrichtung dem Induktionsofen (1) vorgeordneten, insbesondere unmittelbar vorgeordneten, Prozess, ermittelt wird.

11. Verfahren nach einem der vorhergehenden Ansprüche
**dadurch gekennzeichnet, dass** das Modell (5) eine Energieabfuhr aus und eine Energiezufuhr in das Walzgut (G) berücksichtigt.

12. Verfahren nach einem der vorhergehenden Ansprüche,
**dadurch gekennzeichnet, dass** das Modell (5) Auswirkungen einer durch die Induktionsspulen (2) bewirkte Energiezufuhr tiefenabhängig für das Walzgut (G) beschreibt.

13. Verfahren nach einem der vorhergehenden Ansprüche,
**dadurch gekennzeichnet, dass** das Modell (5) derart ausgebildet ist, dass es eine während des Durchlaufens des Induktionsofens (1) auftretende Phasenumwandlung des Walzguts (G) berücksichtigt.

14. Verfahren nach einem der vorhergehenden Ansprüche,
**dadurch gekennzeichnet, dass** die Mehrzahl an Induktionsspulen (2) einzeln gesteuert und/oder geregelt wird.

**15.** Verfahren nach einem der vorhergehenden Ansprüche,
**dadurch gekennzeichnet, dass** die Ist-Größe ein Ist-Temperaturverlauf in Breitenrichtung (S) des Walzguts (G) und die Soll-Größe ein Soll-Temperaturverlauf in Breitenrichtung (S) des Walzguts (G) ist, und dass ein Teil der Induktionsspulen (2) aus der Mehrzahl an Induktionsspulen (2) derart angeordnet ist und derart gesteuert und/oder geregelt wird, dass die tatsächliche Ist-Temperaturverteilung in Breitenrichtung (T) der Soll-Temperaturverteilung in Breitenrichtung (T) angenähert wird.

**16.** Verfahren nach einem der vorhergehenden Ansprüche,
**dadurch gekennzeichnet, dass** eine Einrichtung (3) zur Messung einer den energetischen Zustand des Walzguts beschreibenden Größe dem Induktionsofen (1) in Massenflussrichtung (T) nachgeordnet ist, wobei das Modell (5) anhand der gemessenen Zustandsgröße, insbesondere der Temperatur, derart adaptiert wird, dass ein mittels des Modells (5) ermittelter Zustand für den wenigstens einen Walzgutabschnitt (X) dem gemessenen Zustand des wenigstens einen Walzgutabschnitts (X) angenähert wird.

**17.** Steuer und/oder Regeleinrichtung (9) für eine Walzanlage (20), insbesondere Gießwalzverbundanlage, mit einem maschinenlesbaren Programmcode (10), welcher Steuerbefehle aufweist, welche bei deren Ausführung die Steuer- und/oder Regeleinrichtung (9) zur Durchführung des Verfahrens nach einem der Ansprüche 1 bis 16 veranlassen.

**18.** Walzanlage (20), insbesondere Gießwalzverbundanlage, zum Herstellen von Walzgut (G), mit einem eine Mehrzahl an Induktionsspulen (2) umfassenden Induktionsofen (1) zum Erwärmen des den Induktionsofen (1) durchlaufenden Walzguts (G), mit einer Steuer- und/oder Regeleinrichtung (9) nach Anspruch 17, wobei die Mehrzahl an Induktionsspulen (2) mit der Steuer-und/oder Regeleinrichtung (9) wirkverbunden ist.

**EUROPÄISCHER RECHERCHENBERICHT**

Europäisches Patentamt
European Patent Office
Office européen des brevets

Nummer der Anmeldung

EP 09 16 6174

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 496 129 A1 (JFE STEEL CORP [JP]) 12. Januar 2005 (2005-01-12) | 1-5,7-8, 11-12, 17-18 | INV. C21D8/02 C21D9/60 C21D11/00 |
| A | * Absatz [0030] - Absatz [0090] * * Absatz [0130] - Absatz [0178] * ----- | 9,13-16 | |
| X | WO 2007/051521 A2 (SMS DEMAG AG [DE]; SEIDEL JUERGEN [DE]; PETERS MATTHIAS [DE]) 10. Mai 2007 (2007-05-10) * Seite 4, Zeile 17 - Seite 5, Zeile 11; Ansprüche 1-5,7-10; Abbildungen 1,3,4 * ----- | 1-5,7, 10,14, 16-18 | |
| A | DE 43 38 608 A1 (SIEMENS AG [DE]) 3. August 1995 (1995-08-03) * Spalte 3, Zeile 21 - Zeile 63; Ansprüche 1-5 * ----- | 1-18 | |
| A | DE 10 2005 036068 A1 (SIEMENS AG [DE]) 8. Februar 2007 (2007-02-08) * Ansprüche 1-13 * ----- | 1-6,10, 13,15-18 | |
| A | DE 195 08 474 A1 (SIEMENS AG [DE]) 19. September 1996 (1996-09-19) * Seite 4, Zeile 19 - Seite 5, Zeile 43 * ----- | 1-6 | RECHERCHIERTE SACHGEBIETE (IPC) C21D |
| A | EP 1 624 982 B1 (SIEMENS AG [DE]) 25. April 2007 (2007-04-25) * Absatz [0026] - Absatz [0045]; Ansprüche 1-12 * ----- | 1-6 | |
| A | WO 03/045599 A1 (SIEMENS AG [DE]; WEINZIERL KLAUS [DE]; METZGER MICHAEL [DE]; KURZ MATT) 5. Juni 2003 (2003-06-05) * das ganze Dokument * ----- | 1-6,10, 13,15-18 | |

Der vorliegende Recherchenbericht wurde für alle Patentansprüche erstellt

| Recherchenort | Abschlußdatum der Recherche | Prüfer |
|---|---|---|
| München | 2. Februar 2010 | Lilimpakis, Emmanuel |

EPO FORM 1503 03.82 (P04C03)

**EP 2 287 345 A1**

| Im Recherchenbericht angeführtes Patentdokument | | Datum der Veröffentlichung | Mitglied(er) der Patentfamilie | | Datum der Veröffentlichung |
|---|---|---|---|---|---|
| EP 1496129 | A1 | 12-01-2005 | CN | 1549865 A | 24-11-2004 |
| | | | WO | 03085142 A1 | 16-10-2003 |
| | | | TW | 224144 B | 21-11-2004 |
| | | | US | 2004164071 A1 | 26-08-2004 |
| WO 2007051521 | A2 | 10-05-2007 | AU | 2006310840 A1 | 10-05-2007 |
| | | | CA | 2627160 A1 | 10-05-2007 |
| | | | DE | 102006002505 A1 | 03-05-2007 |
| | | | EP | 1951916 A2 | 06-08-2008 |
| | | | JP | 2009513360 T | 02-04-2009 |
| | | | KR | 20080063493 A | 04-07-2008 |
| | | | US | 2009320546 A1 | 31-12-2009 |
| DE 4338608 | A1 | 03-08-1995 | JP | 3336135 B2 | 21-10-2002 |
| | | | JP | 7191712 A | 28-07-1995 |
| | | | US | 5673368 A | 30-09-1997 |
| DE 102005036068 | A1 | 08-02-2007 | CN | 101213549 A | 02-07-2008 |
| | | | EP | 1910951 A1 | 16-04-2008 |
| | | | WO | 2007014831 A1 | 08-02-2007 |
| | | | US | 2009265146 A1 | 22-10-2009 |
| DE 19508474 | A1 | 19-09-1996 | AT | 194229 T | 15-07-2000 |
| | | | CN | 1178016 A | 01-04-1998 |
| | | | WO | 9628771 A1 | 19-09-1996 |
| | | | EP | 0813700 A1 | 29-12-1997 |
| | | | US | 6085183 A | 04-07-2000 |
| EP 1624982 | B1 | 25-04-2007 | AT | 360483 T | 15-05-2007 |
| | | | EP | 1624982 A2 | 15-02-2006 |
| | | | WO | 2004076086 A2 | 10-09-2004 |
| | | | JP | 2006518670 T | 17-08-2006 |
| | | | US | 2006156773 A1 | 20-07-2006 |
| WO 03045599 | A1 | 05-06-2003 | AT | 440681 T | 15-09-2009 |
| | | | CN | 1589184 A | 02-03-2005 |
| | | | DE | 10156008 A1 | 05-06-2003 |
| | | | EP | 1444059 A1 | 11-08-2004 |
| | | | JP | 2005510359 T | 21-04-2005 |
| | | | RU | 2291750 C2 | 20-01-2007 |
| | | | US | 2004205951 A1 | 21-10-2004 |

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2005089785 A

- DE 10251716 B3